# EUROPÄISCHE PATENTANMELDUNG

(11) **EP 2 559 829 A2**
(43) Veröffentlichungstag der Anmeldung: **20.02.2013**
(21) Anmeldenummer: 12180564.2
(22) Anmeldetag: 15.08.2012
(51) Int. Cl.: E04H 6/02

(54) **Unterstand für ein Kraftfahrzeug**

(30) Priorität: 19.08.2011 DE 102011111031
(71) Anmelder: Leopold Kostal GmbH & Co. KG, 58513 Lüdenscheid (DE)
(72) Erfinder: Welschholz, Jörg, 58849 Herscheid (DE)
(74) Vertreter: Kerkmann, Detlef

(57) **Zusammenfassung**

Ein Unterstand für ein Kraftfahrzeug mit einem Dach (1), das auf einer oder mehreren Stütze(n)(2) angeordnet ist, welche an einem Betonfundament (3) angeschlossen ist/sind, und mit einer Ladestation zum Laden der Traktionsbatterie eines elektrisch angetriebenen Kraftfahrzeugs, ist erfindungsgemäß dadurch gekennzeichnet, dass Komponenten der Ladestation in einem durch zumindest ein Element des Betonfundaments (3) ausgebildeten Hohlraum (3') aufgenommen sind.

## Beschreibung

Die Erfindung betrifft einen Unterstand für ein Kraftfahrzeug mit einem Dach, das auf einer oder mehreren Stütze(n) angeordnet ist, welche an einem Betonfundament angeschlossen ist/sind, und mit einer Ladestation zum Laden der Traktionsbatterie eines elektrisch angetriebenen Kraftfahrzeugs.

Unterstände sind freistehende, offene Bauten mit Dach zum Schutz von Personen und Gegenständen vor Witterung. Unterstände, die zum geschützten Abstellen eines Kraftfahrzeugs dienen, werden landläufig auch als Carports bezeichnet. Neben der reinen Schutzfunktion können solche Carports auch weitere Funktionen erfüllen. So kann beispielsweise das Dach eines Carports als Aufnahme für Solarzellen zur photovoltaischen Stromerzeugung dienen, wobei der erzeugte Strom in das öffentliche Netz eingespeist, oder im Falle eines elektrisch angetriebenen Kraftfahrzeugs direkt zur Aufladung der Traktionsbatterie desselben verwendet werden kann.

Die DE 10 2010 018 917 A1 offenbart ein Carport bzw. einen Unterstand für ein Kraftfahrzeug gemäß dem Oberbegriff des Patentanspruchs 1. Das Dach dieses Carports ist auf mehreren Stützen angeordnet, die als Fachwerke aus Aluminium oder Baustahl ausgeführt und an betonierten Streifenfundamenten angeschlossen sind. Das Dach des Carports ist darüber hinaus mit Solarmodulen versehen, die zur photovoltaischen Stromerzeugung genutzt werden. Als Erweiterung dieses Carports ist eine Zapfeinrichtung für elektrische Energie vorgesehen. Bei dieser Zapfeinrichtung handelt es sich also offenbar im weitesten Sinne um eine Ladestation zum Laden der Traktionsbatterie eines elektrisch angetriebenen Kraftfahrzeugs, die aber ansonsten nicht näher beschrieben ist.

Die vorliegende Erfindung bildet einen solchen Unterstand für ein Kraftfahrzeug dahin gehend weiter, die Ladestation so in diesen zu integrieren, dass ein Laden der Traktionsbatterie eines elektrisch angetriebenen Kraftfahrzeugs sicher und bequem erfolgen kann, und die Ladestation zudem sowohl gegen Witterungseinflüsse als auch gegen unbefugten Zugriff geschützt ist.

Dies gelingt erfindungsgemäß dadurch, dass Komponenten der Ladestation in einem durch zumindest ein Element des Betonfundaments ausgebildeten Hohlraum aufgenommen sind.

Bei einer bevorzugten Ausführungsform des erfindungsgemäßen Unterstandes ist das Betonfundament als ein aus einem oder mehreren vorgefertigten Elementen bestehendes Aufstandfundament ausgeführt.

Bei einer bevorzugten Weiterbildung des erfindungsgemäßen Unterstandes ist vorgesehen, dass das Dach freitragend ist und eine von einem Rahmen umfasste Unterkonstruktion aufweist, auf deren Oberseite Solarmodule zur photovoltaischen Stromerzeugung angeordnet sind.

Der erfindungsgemäße Unterstand eignet sich in besonderer Weise zur Aufnahme einer Ladestation zum induktiven Laden der Traktionsbatterie des Kraftfahrzeugs. Eine solche wird auch in dem im Folgenden dargestellten Ausführungsbeispiel näher beschrieben. Selbstverständlich eignet sich der erfindungsgemäße Unterstand aber auch zur Aufnahme einer Ladestation zum galvanisch gekoppelten, also leitungsgebundenen Laden der Traktionsbatterien des Kraftfahrzeugs etwa mittels eines mit einem Steckverbinder versehenen Ladekabels.

Weitere vorteilhafte Ausgestaltungen und Weiterbildungen des erfindungsgemäßen Unterstandes ergeben sich aus den Unteransprüchen und werden anhand der Zeichnung erläutert.

Dabei zeigen:
- **Fig. 1:**: eine Ansicht eines erfindungsgemäßen Unterstandes

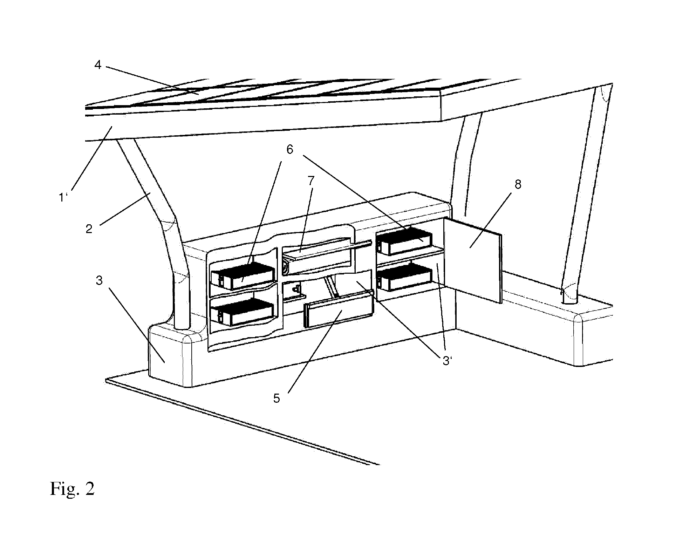

- **Fig 2:**: eine Detailvergrößerung des Unterstandes aus Fig. 1, wobei das Betonfundament teilweise geöffnet dargestellt ist

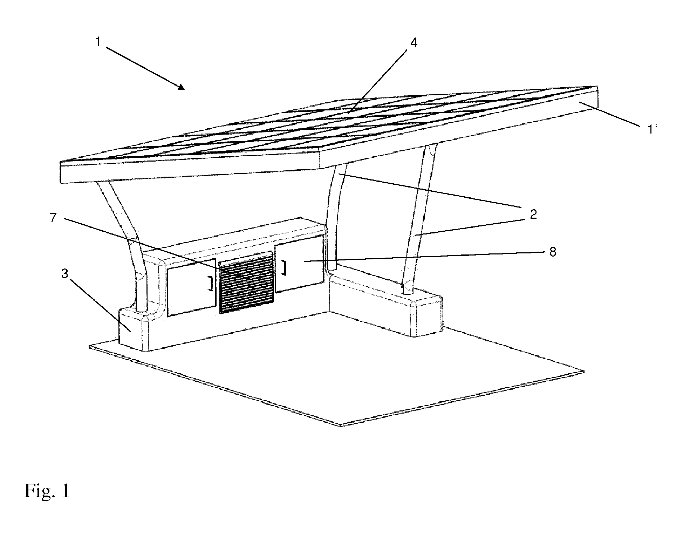

Der in Fig. 1 gezeigte, auch als Carport bezeichnete, erfindungsgemäße Unterstand für ein Kraftfahrzeug basiert auf einem Betonfundament 3. Dieses Betonfundament 3 ist als Aufstandfundament ausgeführt, das aus einem oder mehreren vorgefertigten Elementen bestehend auf einem geeigneten Untergrund platziert wird. Angeschlossen an diesem Betonfundament 3 sind mehrere Stützen 2 für eine freitragende Dachkonstruktion. Die Stützen 2 können dabei beispielsweise aus Baustahl oder Aluminium aber z.B. auch aus Holz, Kohlefaser-Verbundwerkstoffen oder anderen geeigneten Kunststoffen bestehen. Das freitragende Dach 1 besteht aus einer von einem Rahmen 1' getragenen Unterkonstruktion, auf deren Oberseite Solarmodule 4 zur photovoltaischen Stromerzeugung angeordnet sind.

Ein Element des Betonfundaments 3 ist mit Hohlräumen 3' versehen, die zur Aufnahme von Komponenten einer Ladestation zum Laden der Traktionsbatterie eines elektrisch angetriebenen Kraftfahrzeugs sowie von Batterien 4 zum Speichern elektrischer Energie vorgesehen sind. In dem hier gezeigten Fall handelt es sich bei der Ladestation um eine solche zum induktiven Laden der Traktionsbatterie des Kraftfahrzeugs. Ein wesentlicher Bestandteil einer solchen Ladestation ist eine an das Kraftfahrzeug anfügbare Ankoppelvorrichtung 5 mit einem ersten Transformatorteil, durch das elektrische Energie auf ein an dem Kraftfahrzeug vorhandenes, zweites Transformatorteil übertragen werden kann. Das Transformatorteil des hier nicht dargestellten Kraftfahrzeugs ist vorzugsweise direkt hinter dessen vorderem Kennzeichenschild angeordnet, welches zum Aufladen seiner Batterie beim Einfahren des Kraftfahrzeugs in den Unterstand möglichst nah an die Ankoppelvorrichtung 5 herangebracht wird. Die Ankoppelvorrichtung 5 selbst ist motorisch in mehreren Raumrichtungen verstellbar, so dass sie zur Kopplung der beiden Transformatorteile der Ladestation und des Kraftfahrzeugs miteinander gegenüber dem Kennzeichenschild exakt positionierbar ist.

Wenn kein Ladevorgang erfolgt, ist die Ankoppelvorrichtung 5 in einen Hohlraum 3' des Betonfundaments 3 zurückgezogen und nach außen hin durch einen Rollladen 7 abgedeckt. Der den Hohlraum 3' des Betonfundaments 3 verschließende Rollladen 7 bietet so der Ankoppelvorrichtung 5 Schutz gegen Witterungseinflüsse, unbefugte Benutzung oder Vandalismus. Zum Starten eines Ladevorgangs kann der Rollladen 7 beispielsweise durch ein mit einem Berechtigungsnachweis verbundenes Fernsteuerungssignal motorgetrieben geöffnet werden. Der durch den Rollladen 7 verschließbare Hohlraum 3' des Betonfundaments 3 kann neben der Ankoppelvorrichtung 5 selbstverständlich auch weitere Komponenten der Ladestation aufnehmen, wie z.B. einen Hochfrequenz-Wechselrichter zum Betrieb des ladestationsseitigen Transformatorteils.

In weiteren Hohlräumen 3' des Betonfundaments 3 sind Batterien 6 aufgenommen, die als Zwischenspeicher für elektrische Energie zum Aufladen des Kraftfahrzeugs im Rahmen eines intelligenten Energiemanagements dienen. So wird bei einem Ladevorgang der Traktionsbatterie des Kraftfahrzeugs zunächst der direkt von den Solarzellen 4 auf dem Dach 1 des Unterstandes gelieferte Strom verwendet. Sollte dieser wegen fehlender oder zumindest momentan zu geringer Sonneneinstrahlung nicht oder nur in unzureichendem Maße zur Verfügung stehen, um eine optimale Ladung zu ermöglichen, so wird zumindest zusätzlich auch die in den Batterien 6 der Ladestation gespeicherte elektrische Energie zur Aufladung der Fahrzeugbatterie verwendet. Die Batterien 6 der Ladestation werden mit dem von den Solarzellen 4 zu Zeiten, in denen keine Fahrzeugbatterie geladen werden soll, gelieferten Strom wieder aufgeladen. Die die Batterien 6 aufnehmenden Hohlräume 3' des Betonfundaments 3 sind nach außen hin durch Türen 8 verschließbar, die wie der Rollladen 7 zum Schutz gegen Witterungseinflüsse, unbefugte Benutzung oder Vandalismus dienen.

Der erfindungsgemäße Unterstand kann somit eine völlig autarke, von jeder Anbindung an ein öffentliches oder ein Haushalts-Stromnetz unabhängige Ladestation umfassen. Selbstverständlich kann jedoch bei Verfügbarkeit des einen oder anderen solcher Netze ein Anschluss an diese vorgesehen werden. Das Konzept des intelligenten Energiemanagements kann dann um die damit gegebenen Möglichkeiten der Nutzung der elektrischen Energie für Geräte in einem Haushalt, der Energieeinspeisung in das öffentliche Netz sowie des Bezuges von Energie aus diesem Netz sinnvoll erweitert werden.

## Patentansprüche

1. Unterstand für ein Kraftfahrzeug mit einem Dach (1), das auf einer oder mehreren Stütze(n) (2) angeordnet ist, welche an einem Betonfundament (3) angeschlossen ist/sind, und mit einer Ladestation zum Laden der Traktionsbatterie eines elektrisch angetriebenen Kraftfahrzeugs, **dadurch gekennzeichnet, dass** Komponenten der Ladestation in einem durch zumindest ein Element des Betonfundaments (3) ausgebildeten Hohlraum (3') aufgenommen sind.

2. Unterstand nach Anspruch 1, **dadurch gekennzeichnet, dass** das Betonfundament (3) als ein aus einem oder mehreren vorgefertigten Elementen bestehendes Aufstandfundament ausgeführt ist.

3. Unterstand nach Anspruch 1 oder 2, **dadurch gekennzeichnet, dass** das Dach (1) freitragend ist und eine von einem Rahmen (1') umfasste Unterkonstruktion aufweist, auf deren Oberseite Solarmodule (4) zur photovoltaischen Stromerzeugung angeordnet sind.

4. Unterstand nach einem der Ansprüche 1 bis 3, **dadurch gekennzeichnet, dass** die Ladestation zum induktiven Laden der Traktionsbatterie des Kraftfahrzeugs ausgebildet ist, und eine an das Kraftfahrzeug anfügbare Ankoppelvorrichtung (5) mit einem ersten Transformatorteil, durch das elektrische Energie auf ein an dem Kraftfahrzeug vorhandenes, zweites Transformatorteil übertragen werden kann, umfasst.

5. Unterstand nach einem der Ansprüche 1 bis 4, **dadurch gekennzeichnet, dass** der Komponenten der Ladestation aufnehmende Hohlraum (3') des Betonfundaments (3) nach außen hin durch einen Rollladen (7) verschließbar ist.

6. Unterstand nach Anspruch 5, **dadurch gekennzeichnet, dass** der Rollladen motorgetrieben geöffnet und geschlossen werden kann.

7. Unterstand nach einem der Ansprüche 1 bis 6, **dadurch gekennzeichnet, dass** das Betonfundament (3) weitere Hohlräume (3') aufweist, und dass in diesen Batterien (6) aufgenommen sind, die als Zwischenspeicher für elektrische Energie zum Aufladen der Traktionsbatterie des Kraftfahrzeugs dienen.
